# EUROPEAN PATENT APPLICATION

(11) **EP 2 657 857 A1**
(43) Date of publication of application: **30.10.2013**
(21) Application number: 12165880.1
(22) Date of filing: 27.04.2012
(51) Int. Cl.: G06F 17/30

(54) **Method for binary classification of a query image**

(71) Applicant: ATG Advanced Swiss Technology Group AG, 8808 Pfäffikon (CH)
(72) Inventor: Lienhart, Rainer, 86316 Friedberg (DE); Ries, Christian, 86150 Augsburg (DE)
(74) Representative: Liedtke, Markus

(57) **Abstract**

The invention relates to a method for the training of a classifier based on weakly labeled images and for the binary classification of an image. The training of the classifier comprises the steps of automatically and iteratively determining initial regions of interest for a training set and further on refining said regions of interest and adapting the classifier onto the refined regions of interest by a classifier refinement procedure. Further on, for a query image with unknown classification, an initial region of interest is determined and refined as to maximize the probability value derived at the output of said classifier. The query image is automatically assigned a negative classification label if said probability value is lower than or equal to a predetermined first threshold. The query image is automatically assigned a positive classification label if said probability value is greater than a predetermined second threshold.

## Description

### Technical Field

The invention relates to a method for classification of a query image, e.g. an unclassified image.

### Background of the Invention

The need for reliable automatic content analysis has been rising with the rapid growth of the number of digital images that are publicly available through the Internet. Reliable automatic content classification systems can be used for retrieval tasks in search engines as well as for filtering out unwanted images or images with offensive contents. In many cases, these requirements lead to the task of deciding of whether an image contains a relevant object, i.e. an object of a specific category, or not.

According to the state of the art, the problem of constructing a classifier is solved by choosing a specific classifier out of a set of potential classifiers so that some predetermined error criterion is minimized. This process is referred to as training of the classifier.

The training of the classifier may utilize a set of images with predetermined class assignments, referred to as labeled data.

It is possible to adapt parameters of a classifier of some predetermined structure in such a way that the output of the classifier with adapted parameters differs least from the predetermined class assignments for the labeled data according to some predefined error criterion. The set of images used for adapting the classifier's parameters is referred to as training set. The value of the error criterion for the images in the training set is referred to as training error.

As the training error generally is a biased estimate of the performance of the classifier, it may be advantageous to split the labeled data into a training set and into a disjoint set of images used for estimating the adapted, i.e. trained, classifier's performance. This disjoint set of images is referred to as validation set.

An image that contains a relevant object is further on denoted as a positive image. On the contrary, an image without a relevant object is denoted as a negative image.

Methods for training classifiers such as e.g. Support Vector Machines as well as estimating their performance are described e.g. in Christopher Bishop: Pattern Recognition and Machine Learning, Springer, second edition 2007. Also, meta-algorithms for improving the performance of other training algorithms are known, like AdaBoost, described in Yoav Freund and Robert E Schapire: A decision-theoretic generalization of on-line learning and an application to boosting. Journal of Computer and System Sciences, 55(1):119 - 139, 1997.

Aside from image classification, where one out of a predetermined number of potential classes is assigned to a given query image, search indices for image retrieval have been proposed. A search index provides a means to identify similar images for a given query image, according to some predetermined similarity criterion. Search indices have been described e.g. in D. Nister and H. Stewenius: Scalable recognition with a vocabulary tree, published in Proceedings of IEEE Computer Society Conference on Computer Vision and Pattern Recognition, 2006, volume 2, pages 2161- 2168, 2006 and in Josef Sivic and Andrew Zisserman: Video google: A text retrieval approach to object matching in videos, published in Proceedings of the Ninth IEEE International Conference on Computer Vision - Volume 2, ICCV '03, pages 1470 - 1477, Washington, DC, USA, 2003.

As the relevant object(s) may occupy just a portion of an entire image, it is important to identify the portion(s) of the image that potentially contains at least one relevant object, in the following referred to as region of interest (ROI).

Furthermore, a region of interest is usually not represented as pixel data to a classifier. Instead, local feature descriptors are utilized to generate a representation of a region of interest that enables a good differentiation between distinct classes.

A potential local feature descriptor is given by the scale-invariant feature transform (SIFT), described in David G. Lowe: Distinctive image features from scale-invariant key-points, published in International Journal of Computer Vision, 60(2):91-110, 2004. A further potential local feature descriptor is given by a method known as speed up robust features (SURF), described in Herbert Bay, Tinne Tuytelaars, and Luc Van Gool: Surf: Speeded up robust features, published in Computer Vision and Image Understanding (CVIU),110(3):346 - 359, 2008. Further feature descriptors are derived by self-similarity measures according to Eli Shechtman and Michal Irani: Matching local self-similarities across images and videos, published in Proceedings of IEEE Conference on Computer Vision and Pattern Recognition 2007 (CVPR'07), pages 1 - 8, June 2007 or by a method known as Maximally Stable Extremal Regions (MSER), described in P.-E. Forssen and D.G. Lowe: Shape descriptors for maximally stable extremal regions, published in Proceedings of IEEE 11th International Conference on Computer Vision 2007, pages 1-8, October 2007. A further method known as Histogram of oriented Gradients (HoG) is described in N. Dalal and B. Triggs: Histograms of oriented gradients for human detection, published in Proceedings of IEEE Computer Society Conference on Computer Vision and Pattern Recognition, 2005. CVPR 2005. volume 1, pages 886 - 893 vol. 1, June 2005.

Features derived from a region of interest can be quantized into so called visual words and then aggregated into a word occurrence histogram for a given region of interest. A visual word represents a typical, iconic image fragment independent from the location of its occurrence. A method to identify and cluster visual words is described in L. Fei-Fei and P. Perona. A bayesian hierarchical model for learning natural scene categories, published in Proceedings of IEEE Computer Society Conference on Computer Vision and Pattern Recognition, 2005, volume 2, pages 524 - 531, June 2005. This type of representation, also known as bag-of-visual-words, has also been used for image filtering scenarios, as e.g. described in T. Deselaers, L. Pimenidis, and H. Ney. Bag-of-visual-words models for adult image classification and filtering, published in Proceedings of the 19th International Conference on Pattern Recognition, 2008, pages 1-4, Dec. 2008.

A further well-known technique for creating a feature representation of image data is the probabilistic latent semantic analysis (pLSA) as introduced in Th. Hofmann: Probabilistic Latent Semantic Indexing, published in Proceedings of the Twenty-Second Annual International SIGIR Conference on Research and Development in Information Retrieval (SIGIR-99). Its application on large scale image databases was suggested in R. Lienhart and M. Slaney: Plsa on large scale image databases, published in Proceedings of IEEE International Conference on Acoustics, Speech and Signal Processing, 2007 (ICASSP 2007), volume 4, pages IV-1217 - IV-1220, April 2007.

These approaches have been adopted for searching for scenes (full images) as well as for searching objects in images based on strongly labeled training data, i.e. for training data where the regions of interest are given in advance.

According to the state of the art, such regions of interest are determined by user interaction. For example, a user is requested to draw bounding polygons around relevant objects, if at least one relevant object is present in an image that shall be used to train a classifier.

A method that partially automates the determination of regions of interest using a discriminative color model is given in Michael J. Jones and James M. Rehg: Statistical color models with application to skin detection, International Journal of Computer Vision, 46(1):81- 96, January 2002. However, this approach still requires manual pixel-wise labeling of training images to create the model, so it is not suited to automatically create regions of interest for images in the training set.

A method for iteratively improving a region of interest set has been suggested in P.F. Felzenszwalb, R.B. Girshick, D. McAllester, and D. Ramanan: Object detection with discriminatively trained part-based models, published in IEEE Transactions on Pattern Analysis and Machine Intelligence, 32(9): 1627 - 1645, September 2010.

There, a classifier is trained with features calculated from regions of interest that have been manually determined. Afterwards the regions of interest are modified and the classifier is retrained. These steps are iteratively repeated as to improve the performance of the classifier.

### Summary of the Invention

It is an objective of the present invention to provide an improved method for the classification of a query image.

The objective is achieved by a method according to claim 1 and by a use of a plurality of diverse classification methods according to claim 16.

Preferred embodiments of the invention are given in the dependent claims.

According to the present invention, a method for binary classification of a query image comprises the training of a classifier, comprising the steps of:
- automatically determining initial configurations of regions of interest in positive training images from a weakly labeled training set by means of an initial region determination procedure,
- automatically and iteratively refining the regions of interest in the positive training images by means of a classifier refinement procedure,
   and further comprises applying said classifier, comprising the steps of
- automatically determining an initial configuration of a region of interest in the query image by means of an initial region of interest characteristic learned during said initial region determination procedure,
- automatically determining a refined region of interest in the query image and a probability value assigned thereto by means of a region refinement procedure,
- automatically assigning the image a negative classification if said probability value is lower than or equal to a predetermined first threshold and
- automatically assigning the image a positive classification if said probability value is greater than a predetermined second threshold.

The invented classification method allows a one-class classification, wherein only those images are distinguished and positively classified in one class in which objects are identified; all other images are negatively classified. Alternatively, the invented classification method allows classifying images into two groups on the basis of whether an object is identified in an image or not.

The classification method consists of a training procedure for the classifier and a subsequent application of the trained classifier to a query image.

In the context of the specification, a training set is referred to as strongly labeled training data if its images are not only annotated by an image label (contain at least one desired object vs. contains no desired object), but also such that the locations of the relevant objects are specified for the positive images.

A training set is referred to as weakly labeled in the context of this invention if the information in the labeled training data set is restricted to whether the training image contains (at least) one relevant object or not (i.e., only images labels are given).

In a first step of the training procedure, an initial configuration of the ROI is determined automatically for each positive training image by a predetermined initial region determination procedure. Such an initial region determination procedure could, for example, search for a region that fits best a set of predefined local image characteristics like color, gray value histogram or texture.

In a second step of the training procedure, denoted as classifier refinement procedure, the initial ROI is iteratively refined for each of the positive training images. In other words: In a single iteration of the classifier refinement procedure a modified configuration of the ROI is determined for each of the positive training images. Said modified configuration of the ROI potentially enables a better classification performance. Further on, a classifier is trained on the modified configurations of the ROIs as well as on negative images.

This iterative classifier refinement procedure terminates if either a predetermined number of iterations is reached, or if the classification result of the re-trained classifier on the modified ROIs does not improve any longer on a validation set.

In a first step of the application of the trained classifier, an initial configuration of the ROI is determined automatically for a given query image with unknown classification. The goal is to serve as a fast pre-filter for the second step so that only a smaller plurality of alternative ROIs need to be generated. In the extreme case, this step can be omitted, requiring that every possible ROI in the image is considered a candidate for the refined ROI.

In a second step of the application of the trained classifier, a modified configuration of the ROI is automatically determined for the query image, starting with said initial ROI and then executing said region refinement procedure, which picks out of a plurality of related ROI the one, which is assigned the maximal value of the trained classifier's output amongst a plurality of modified configurations for the initial ROI of the query image.

If the assigned probability value is lower than or equal to a first threshold, the query image is assigned a negative classification. In other words: it is assumed that the image does not contain the relevant object.

If the assigned probability value is greater than a second threshold, the query image is assigned a positive classification. In other words: it is assumed that the image contains the relevant object.

The invented method reduces the effort associated with a classification of a query image as it eliminates the need of manual interaction in the determination of an ROI for both the training data and the query image. This is particularly advantageous for applications where a vast number of images is required to be classified in a fully automatic way, as e.g. for screening content presented in the Internet.

In a further possible embodiment of the invention, said region refinement method comprises the following steps:
- automatically deriving a plurality of regions of interest from the initial region of interest by varying position, scale and aspect ratio of the initial region of interest,
- automatically deriving a feature descriptor for each region of the plurality of regions of interest by means of a feature extraction procedure,
- automatically assigning a probability value to each region of said plurality of regions of interest described by said feature descriptor by means of a classification procedure,
- automatically picking a refined region of interest that is assigned the highest probability value amongst the said plurality of regions of interest.

In this embodiment of the invention, a procedure is adopted that iteratively varies an ROI. An ROI can be moved to some small extent such that there is a significant portion, say more than 95 percentage, of overlap between the original and the moved ROI. An ROI can also be scaled or rotated or transformed otherwise, as long as a sufficient overlap between the original region and the moved ROI is retained. In the extreme case the initial ROI can be ignored in creating candidate ROIs for a new refined ROI.

For each variation of an ROI, a feature descriptor is derived that is passed to a classifier. Thus, for each variation, generally a different probability value is determined as output of the classifier. From this plurality of generally different probability values, the ROI with the highest value replaces the original ROI and is called the refined ROI to the image.

In other words: from a plurality of varied regions of interest the particular variation is chosen, that most likely contains a relevant object or at least parts thereof.

Thus, the robustness of the total classification procedure, particularly with respect to an erroneous initial choice for a ROI, is greatly improved. Therefore, better training results and a better classification performance can be achieved with this embodiment of the invention.

The invented method improves the accuracy and robustness of the classification since the ROI is chosen in an automatic and adaptive way so that it most likely contains a relevant object. In particular, the method does not rely on prior knowledge about the location and/or the specific shape of a relevant object, nor does it assume the same location and/or shape of relevant objects in a plurality of (positive) training images as well as query images.

In further embodiments, the feature extraction procedure may utilize one or multiple of the following procedures: speedup robust features (SURF), maximally stable regions (MSER), histogram of oriented gradients (HOG).

In a further possible embodiment of the invention, the initial region determination procedure identifies an initial ROI that is characterized by at least one pattern and/or feature that occurs consistently across the positive training images and that does not occur across the negative images. This at least one characteristic pattern and /or feature can also be used to create an initial ROI for each query image.

By this criterion, initial ROIs are chosen that are likely to provide a good discrimination between positive and negative images. This eases the region refinement procedure applied further on so that a fewer number of iterations may be sufficient to obtain a sufficient classification accuracy.

In a further possible embodiment of the invention, the initial region determination procedure identifies an initial region characterized by at least one dominant and/or common color that occurs consistently across the positive training images.

Colors that occur consistently across the positive training images are likely to provide a good discrimination between positive and negative images. Thus, it is advantageous to select an initial ROI that contains a significant portion of pixels of such a color.

Again, this eases the region refinement procedure and may reduce the computational load and improve the classification results.

In a further possible embodiment of the invention, the classifier refinement procedure comprises at least one iteration comprising the steps of
- training a binary classifier on the regions of interest of the positive images and on the negative images or parts thereof,
- determining refined regions of interest of the positive images by applying said region refinement procedure
- replacing the regions of interest of the positives images with said refined regions of interest of the positive images,
- training a binary classifier on the refined regions of interest of the positive images and the negative images or parts thereof.

According to this embodiment of the invention, the binary classifier is improved within each iteration by retraining the classifier on a set of refined ROIs. The region refinement procedure aims at improving the discriminative value of the ROIs determined for positive images. Therefore, an improved performance of the binary classifier can be expected, if the binary classifier is trained with the improved ROIs.

Since the initial ROIs have been determined automatically, these initial ROIs may cover relevant objects only partially and may contain irrelevant image details. The classification results will therefore most likely be suboptimal or even insufficient at the beginning of the classifier refinement procedure.

For some trained classifier, the ROIs in the positive training images are modified by the region refinement procedure as to increase the probability value of the classifier's s output. In other words: the ROIs are modified so that the difference between the known classification of the positive training images and the output of the trained classifier is minimized. Thus, the modified, i.e. refined, ROIs provide a better classification performance for the trained classifier and most likely contain more discriminative features than the previous ROIs.

With these refined ROIs, in turn the classifier is retrained. As the refined ROIs contain more discriminative features, it is expected that the retrained classifier has a better performance compared to the previously trained classifier.

In a further embodiment of the invention, the method for one-class or binary classification of a query image additionally comprises the following step:
- determining a validation performance for the trained classifier and further on comprising a repetition of the following steps:
- retraining the classifier by automatically and iteratively refining regions of interest in the positive training images by means of a classifier refinement procedure,
- determining a validation performance for the retrained classifier until the validation performance for the retrained classifier is no longer improved or until a predetermined number of iterations is reached.

In this further embodiment of the invention, regions of interest determined in a plurality of images from a training set are systematically modified according to a predefined scheme. In other words: for each image in the training set, a sequence of different regions of interest is generated, starting with some initial ROI.

For example, a ROI can be moved to some small extent such that there is a significant portion, say more than 95 percentage, of overlap between the original and the moved ROI. A ROI can also be scaled or rotated or transformed otherwise, as long as a sufficient overlap between the original region and the moved ROI is retained.

In a subsequent step, a classifier is trained with the modified regions of interest on a plurality of images from a training set.

The performance of the trained classifier is estimated using a validation set that is disjoint from the training set. While the training error is a biased estimate of the performance of the trained classifier, the error on the validation set of images, denoted as validation error further on, is independent from the training and thus unbiased.

This procedure of modifying the regions of interest and subsequently retraining the classifier on the modified regions of interest is repeated as long as the unbiased validation error decreases at least by some predetermined quantity.

It is a specific advantage of this embodiment that regions of interest are chosen as to optimize the performance of the classifier with respect to the validation error. Therefore, the initial choice for the regions of interest is less crucial. Thus, an automated method for constructing the initial regions of interest is sufficient even if this method is error prone. Incomplete or partially wrong regions of interest will be corrected by the subsequent steps in an unsupervised manner.

In a further possible embodiment of the invention, the method for binary classification of a query image additionally comprises the following steps if the probability value assigned to the query image is in between the first and the second threshold:
- automatically deriving a confidence value by means of a comparison procedure,
- determining a corrected probability value as a function of the probability value and the confidence value where said function is monotonically increasing with respect to the confidence value,
- automatically assigning the image a negative classification if said corrected probability value is lower than a predetermined third threshold and
- automatically assigning the image a positive classification if said corrected probability value is greater or equal than the predetermined third threshold.

In a first step of this embodiment, a comparison procedure is performed that compares the query image against a plurality of images from a labeled data set. For example, a similarity measurement is applied on each pair of images consisting of the query image and an image from the labeled data set. The application of this similarity measurement may be restricted to image portions outside identified regions of interest, i.e. to the image background or context. Thus, images from the labeled data set can be ranked according to their similarity with respect to the query image.

Further on, a confidence value is derived from a subset of labeled images that are particularly similar to the query image. As an example, if the clear majority, say 80 percent, of the images in this subset is labeled homogeneously, a relatively high confidence value is derived. On the contrary, if the portions of differently labeled images in this subset are approximately balanced, say 60 percent of positively labeled images versus 40 percent of negatively labeled images, a relatively low confidence value is derived.

Based on said confidence value, the previously calculated probability value is corrected into a corrected probability value. For example, the probability value may be moved towards either one or zero, depending on whether the original probability value was greater or lower than 0.5. The extent of that movement may increase as the derived confidence value increases. Therefore, relatively high confidence values support a differentiation of corrected probability values better than relatively low confidence values.

Finally, the corrected probability value is compared against a third threshold. If the corrected probability value is below said third threshold, the query image is assigned a negative classification. Otherwise, it is assigned a positive classification.

It is a particular advantage of this embodiment of the invention that information aside from the assumed presence or absence of a relevant object is used for the classification of the image. Often this information is called context information. The context of an ROI is particularly useful if relevant objects are frequently associated with similar image characteristics like a certain illumination or a certain indoor-setting of the background.

Thus this embodiment of the invention further improves the accuracy of the classification of the binary image.

In an exemplary embodiment of the invention the corrected probability value solely depends on the confidence value.

In this exemplary embodiment of the invention, a function that is independent on the original probability value is applied on the confidence value, thus reducing the computational burden of the classification.

In a further preferred embodiment of the invention the feature extraction procedure comprises the following steps:
- determining at least one local feature descriptor,
- optionally clustering local feature descriptors into visual words and
- optionally deriving a histogram for said visual words.

In this preferred embodiment of the invention, a variety of local feature descriptors can be applied. One possible way to represent an ROI (region of interest) is by exploiting feature descriptors such as SIFT, SURF, Self-Similarity, MSER or HoG, as mentioned before. Also, different feature descriptors may be combined for a more comprehensive description of the ROI.

These features can be quantized into visual words enabling to compute a word occurrence histogram for a given ROI. This embodiment provides the particular advantage of feature descriptor that can be represented as a vector of fixed length. Thus, easily available and efficient standard training algorithms can be applied to adapt the classifier further on.

In a further preferred embodiment of the invention the classification procedure comprises the application of a Support Vector Machine to the feature descriptors.

The application of Support Vector Machines is particularly advantageous in this preferred embodiment of the invention as efficient and robust training algorithms are available for this type of classifier.

In a further possible embodiment of the invention the classification procedure comprises the application of the Adaptive Boosting Algorithm to the feature descriptors.

The application of the Adaptive Boosting Algorithm is particularly advantageous in this preferred embodiment of the invention, as it improves the performance of the classification procedure, particularly for the case of labeled sets of images that comprise a vast number of images.

In a further exemplary embodiment of the invention the comparison procedure comprises the following steps:
- automatically determining a context or background region with respect to the region of interest for the query image that is disjoint with the region of interest,
- retrieving a non-empty comparison set of weakly labeled comparison images that match said context or background region for the query image according to some predetermined similarity measure and
- automatically determining a confidence value for the query image from the labeling data of the images of the comparison set, where for a fixed number of images in the comparison set the confidence value increases if the percentage of positive images increases.

In this embodiment of the invention, a confidence value is determined for a query image by comparing this image with various images from the labeled data set of images. For this comparison, a context/background region of the query image is automatically selected that does not contain the ROI.

Then, a comparison procedure is performed that compares the context/background region of the query image against a plurality of images from a labeled data set. Thus, a subset of labeled images with relatively high similarity with respect to the context/background region is returned.

The confidence value for the query image will be increased according to the number of positive images in this subset. In other words: if images with a similar characteristic as the context/background region of the query image are frequently classified as positive images, a positive classification of the query image is more likely.

It is a particular advantage of this embodiment of the invention that information aside from the assumed presence or absence of a relevant object is used for the classification of the image. This is particularly useful if relevant objects are frequently associated with other image characteristics like a certain illumination or an indoor-setting of the background.

Thus this embodiment of the invention further improves the accuracy of the classification of the binary image.

In a possible embodiment, an image with a negative classification can be differently processed. E.g., if the image has a negative classification then the image may not be displayed. Additionally or optionally, a message or report may be submitted, e.g. communicated to a surveillance instance to react. Alternatively, the image content may be modified before it is displayed on a human readable device.

In another exemplary embodiment, an image with a positive classification can be differently processed. E.g. if the image has a positive classification then a respective object in the image may be segmented and if the respective object is a person a pose identification procedure may be provided, e.g. to recognize violence. Further, if the respective object is identified as a protected sign, such as trademarks or logos, a product identification procedure may be provided, e.g. to recognize counterfeiting products.

In a further embodiment, a plurality of different, e.g. diverse, methods for classification of a query image is used, where the query image is assigned a classification if a predetermined number of the different diverse methods for classification of a query image assign that classification to the query image.

As mentioned before, a plurality of different classification methods comprising diverse substeps can be combined according to this invention in order to build a particular embodiment of the invention. These diverse substeps of the different classification methods may affect the selection and/or variation of regions of interest, the extraction of feature descriptors from these regions of interest and the training of a classifier based on the feature descriptors. It is also possible to use different subsets of a labeled set of images in order to adapt different procedures.

For example, three different embodiments, or implementations, of said classification method can be trained and further on applied to a query image. For some query images, the output, i.e. the suggested classification, of these three implementations will differ. In that case, the classification assigned by the majority of the implementation will be chosen for the query image.

Thus, flaws of one specific implementation can be compensated for by other implementations. This greatly improves the robustness and reliability of the fused classification.

Further scope of applicability of the present invention will become apparent from the detailed description given hereinafter. However, it should be understood that the detailed description and specific examples, while indicating exemplary embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given herein below and the accompanying drawings which are given by way of illustration only, and thus, are not limiting the present invention, and wherein:
- Figure 1: schematically shows a flowchart for training a ROI classifier on weakly labeled images,
- Figure 2: schematically shows a flowchart for determining a context/background similarity measure and a context/background search index and
- Figure 3: schematically shows a flowchart for classifying a query image.

Corresponding parts are marked with the same reference symbols in all figures.

### Detailed Description of Preferred Embodiments

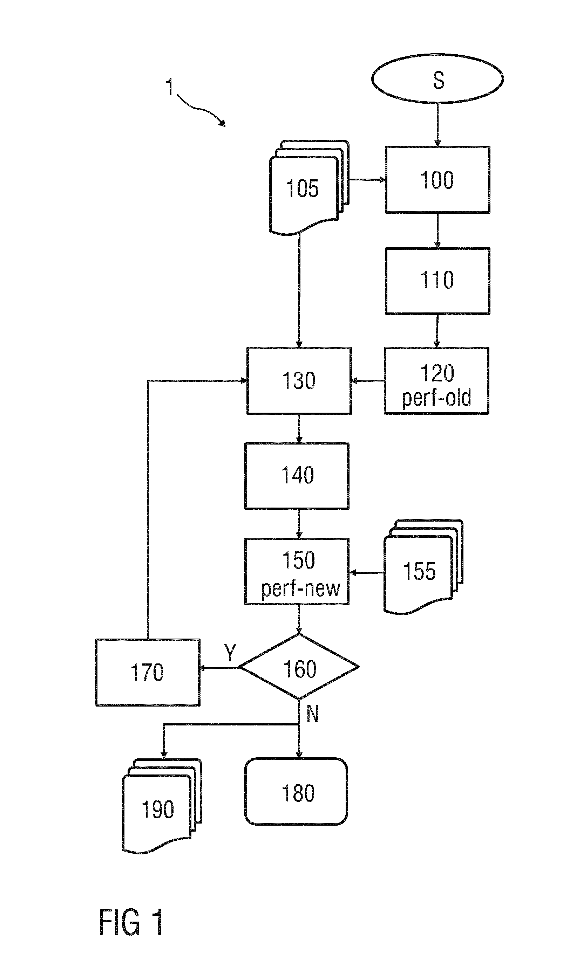

The suggested framework of processing steps consists of a ROI classifier training procedure 1 on weakly labeled data, a context/background training procedure 2 and a classification procedure 3, as shown in detail in Figures 1, 2 and 3, respectively. For both the ROI classifier training procedure 1 and the background training procedure 2, a training set 105, that is a subset of a set of weakly labeled images, is used. That is, the training images in the training set 105 are manually separated into a positive and a negative set. The positive set contains only images, which show the relevant object, while the negative images do not contain the relevant object. A further subset of the set of weakly labeled images with further positive and negative images is withhold for the validation set 155.

The term "context" is used to express that a region around a given ROI is used to describe the background in which an object occurs, while the term "background" is used to express that the whole image without its ROIs is taken as the context.

**Figure 1** shows a sequence of steps that forms the ROI classifier training procedure 1 of our binary classifier of a query image on weakly labeled training images. In order to output a trained classifier 180, a training set 105 of training images and a validation set 155 of validation images are used, which both are disjoint subsets of a set of weakly labeled images.

Starting in an initial ROI determination step 100 with initially determined regions of interest, further on denoted as initial ROIs, which cover the objects/concepts of interest within the positive images, and covering the unavoidable false alarms within the negative images, determined in an initial ROI classifier training step 110, a classifier 180 to detect the visual content of the ROIs within the positive images, while avoiding any false alarm on accidental ROIs detected in negative images, is trained. Based on this trained classifier 180, the initial ROIs are improved by local search in an ROI improvement step 130. The improved ROIs in turn are used to train in a re-training of ROI classifier step 140 a more accurate classifier 180. Several rounds of this refinement iteration are performed, leading to the final classifier 180.

In detail, given the training images, at least one ROI is automatically created for each positive image during the initial ROI determination step 100. An ROI is a polygon, which with high probability contains the wanted object and thus excludes unwanted background areas of the image. The wanted objects are identified as and localized by the local region descriptions that consistently occur throughout the positive image set, while occurring inconsistently and more accidentally in the negative image set.

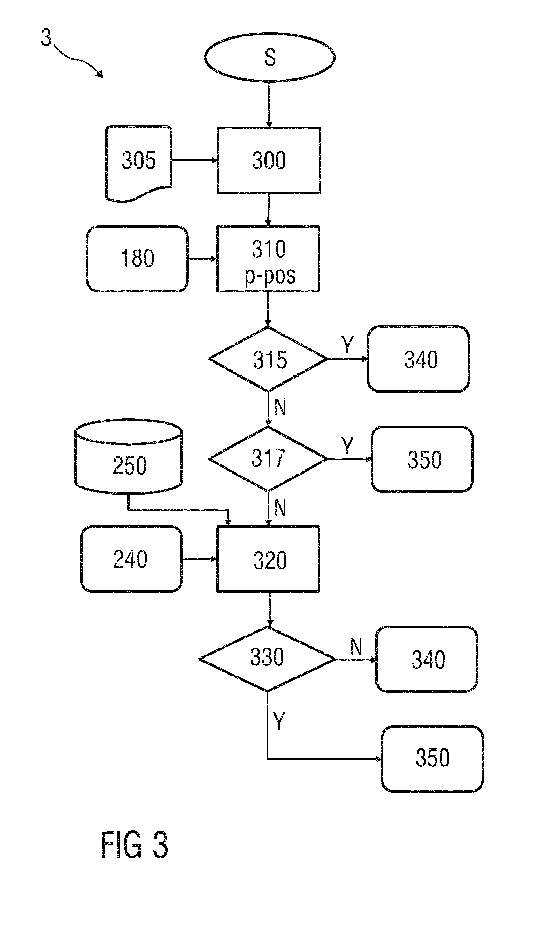

Since only a weakly labeled set of training images is exploited, the ROIs are created automatically by using an algorithm, which finds in an unsupervised manner regularities among positive images, which are not common among negative images. These regularities are used to locate the wanted object/concept within the positive images. However, these regularities will unavoidably, but accidentally and sporadically occur in the negative images, too, constituting false alarms therein. Note, these found regularities among the positive images, but irregularities among the negative images can also be used during classification to determine initial ROIs (see figure 3, ROI determination step 300).

In a preferred embodiment of the invention, a discriminative color model is used in order to identify pixels within each positive image, which are likely to belong to the wanted object/concept and use a bounding polygon, e.g. a rectangle, around these pixels as initial ROIs. This is a fast way to determine initial regions of interest, since evaluating a discriminative color model is usually not time-consuming. Note that the discriminative color will find sporadically and accidentally false alarms, i.e., areas that potentially could contain the wanted object/concept, but do not as they are identified in negative images. Note also that the same discriminate color model can be used during application of the classifier to get an initial ROI (see figure 3, ROI determination step 300).

Any other features aside from color, which can be extracted by algorithms known to those skilled in the art, can be used to mine for the unique common theme among a set of positive images.

Based on the initial ROIs determination step 100, a classifier 180 for classifying these ROIs is trained in the initial ROI classifier training step 110 to detect the visual content of the ROIs within the positive images, while avoiding any false alarm on accidental ROIs detected in negative images.

Since the ROIs are determined automatically, they are not expected to perfectly represent the locations of the wanted object/concept. Instead they may cover only partially the wanted object/concept and/or additionally cover irrelevant regions.

Therefore, the classifier 180 trained in the initial ROI classifier training step 110 is applied to the neighborhood of the current ROIs in order to improve the ROIs, from which in turn an improved classifier 180 can be trained in the re-training of the ROI classifier step 140. For this, the training of an initial classifier 180 is started on the initial ROIs in the initial ROI classifier training step 110, where each ROI is represented by exploiting local feature descriptors such as SIFT, SURF, Self-Similarity, MSER, or HoG.

In a preferred embodiment of the invention, these features are clustered into visual words. It is a specific advantage of this embodiment of the invention, that standard machine learning algorithms like AdaBoost or Support Vector Machines can be applied to train a classifier, since for instance a visual words histogram is a fixed length feature vector. The classifier 180 is trained to return a probability value for the presence of the wanted object/concept within a given ROI, i.e. it returns a high value if the wanted object/concept is present.

In general, after each training or re-training step of the classifier 180 (e.g. in 110 and 140) its performance on an independent validation set is determined in order measure whether the overall classification performance continues to improve.

Therefore, in an initial performance validation step 120, the performance value of the classifier 180 trained in step 110 is determined on a disjoint validation set of images and memorized in the variable perf old. For this, based on the found regularities in step 110 among the positive images, which distinguish them from most negative images, initial ROIs on the positive and negative validation images are created (see figure 3, ROI determination step 300), around which we search for a best detection using the classifier 180. For each ROI, a probability output of the classifier 180 is calculated. Multiple results around the local maximum response are suppressed. Based on the probabilities of identified locations of the ROIs, a query image is classified as positive or negative image. By comparison with the predetermined label of said image, a first average classification performance value perf_old is obtained for the validation set (in the initial performance validation step 120).

In a subsequent ROI improvement step 130, the trained classifier is used to improve the current ROIs, which are the initial ROIs for the first iteration step. For each ROI in the training set images a plurality of ROIs is derived by varying position, scale and aspect ratio of the current region of interest. The classifier 180 is applied to each ROI of the plurality of ROIs in the ROI improvement step 130, in order to determine the ROI with the highest probability output. If the highest probability output is higher than the probability output for the current ROI, then this ROI is used to replace the current ROI for the respective image for the subsequent steps.

After determining the improved ROIs for all training images in the ROI improvement step 130, the classifier 180 is retrained on the improved ROIs in the re-training of ROI classifier step 140. Subsequently, the performance value perf new of this newly trained classifier 180 is determined on the validation set images in a performance validation step 150 (like in the initial performance validation step 120).

If the new performance value perf new is determined as being substantially better than the previously determined performance index perf old in a performance comparison decision, i.e. if perf new exceeds perf old at least by a predetermined positive value epsilon, the improved ROIs and the classifier 180 trained thereon are set as baseline for a next repetition of this process. For this, perf new is assigned to the value of perf old in a baseline revision step 170.

If by the variation of the ROIs the performance of the trained classifier 180 does not improve sufficiently, i.e. if the difference between perf new and perf old is below **the** predetermined value epsilon, or if a maximum number of iterations have been reached, the training procedure 1 is finished. Then the set of improved ROIs 190 for all positive images as well as the classifier 180 trained thereon, i.e. the classifier that provides the best classification performance, are returned.

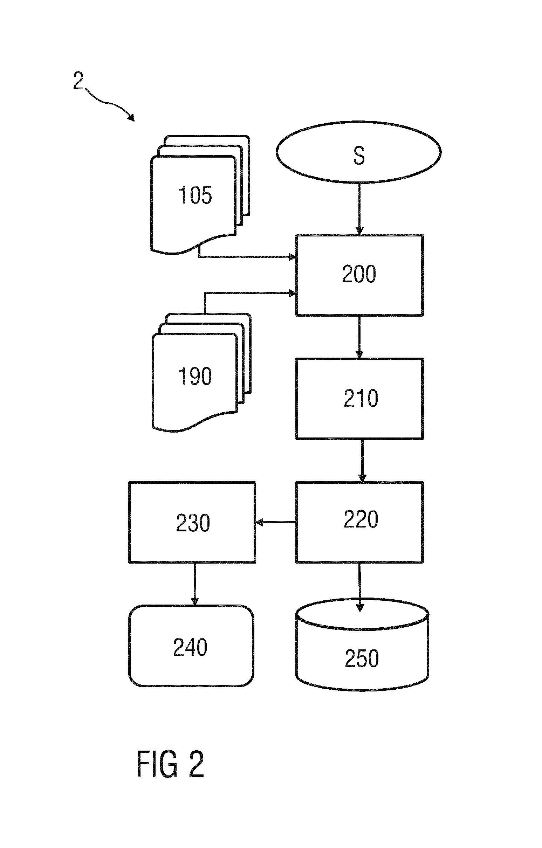

Further on, in a context/background training procedure 2 shown in **Figure 2****,** a context/background search index is created by computing a feature representation of the context/background area of each ROI. This context/background of each ROI may extend up to the complete image, while excluding all ROIs of the image. Often, however, the context/background of each ROI will be limited in size based on the size of the ROI to which it belongs.

This step is performed for the positive as well as the negative images. However, on negative images random ROIs are added to derive a more representative context/background sample. The idea is that the relevant object may occur in several settings that are typical for the relevant object. By indexing the context of the training images, the context of a novel query image can be compared against known contexts/backgrounds. Based on the ratio of positive images in a certain number of most similar background/context results, it can be deduced whether the image is more likely to contain the wanted object or not.

The majority of object classes usually appear in a limited number of different local backgrounds. Therefore, the local background up to the whole image background can be considered as context information for the wanted object/concept class. Thus a background/context search index is exploited as a complementary classification method in order to improve the classification performance of the total procedure.

The flow diagram in **Figure 2** visualizes how the background search index is created. In a background inversion step 200, the background of the positive training images is determined by inverting the improved ROIs 190, which are one of the outputs of the ROI training procedure 1. All negative images provide negative background examples.

In a preferred embodiment of the invention, also subregions of the negative images are exploited as negative background examples. To keep the background derived from the negative images sufficiently similar to the background derived from the positive images, a virtual positive ROI in the computation of the background description may be created.

In a further embodiment of the invention, instead of the whole image without at least one positive ROI, an enlarged ROI without the original ROI can be used to define a local context. In other words, the features are extracted from an enlarged rectangle minus the features from the original rectangle. In this embodiment, ROIs of typical sizes in the positive images are sampled also from the negative images in order to get examples of negative contexts.

For each context/background image, a feature representation is determined in a background feature extraction step 210, for instance a bag-of-words histogram.

In a further embodiment, a topic vector is created for each image by applying a pLSA model to the bag-of-words histograms.

Once a vector representation for each context/background is obtained, it is stored together with the class label in an efficient indexing structure in the context/background indexing step 220, which allows later on to search for similar contexts/backgrounds given the context/background of a given query image. For example, one can use an inverted index, which efficiently maps bag-of-words histograms to a list of similar context/background images.

Thus, a context/background search index 250 is returned by the context/background indexing step 220.

In a preferred embodiment of the invention, a context/background similarity measure 240 is determined in a context/background similarity training step 230. Said context/background similarity measure 240 enables the ranking of the context/background images stored in a context/background search index 250 according to their similarity to a given query context/background image. This further improves the efficiency and accuracy of the context/background training procedure 2.

In a further embodiment of the invention, a simple distance measure such as an instance of the Ln-Norm (e.g., L or L2-norm) is used as context/background similarity measure 240.

Both the context/background similarity measure 240 and the context/background search index 250 are returned by the context/background training procedure 2.

The classifier training procedure 1 provides a classifier 180 for ROIs, while the context/background training procedure 2 provides a context/background search index 250 and a context/background similarity measure 240, which are both used to classify unknown query images. An image is either classified as positive if the image is likely to contain the wanted object/concept or as negative otherwise.

The classification procedure 3 is illustrated in Figure 3. Analogously to the classifier training procedure 1, for a given query image 305 an initial ROI is determined in a ROI determination step 300 based on the regularities found in step 100 among the positive images, which distinguish them from most negative images (same ROI determination method as used in step 120). Note that step 100 consists of a first step in finding the common pattern among the positive images, which distinguishing them from negative images, and a second step in deriving ROIs based on this knowledge. In step 300 only the second step is applied as it is done in step 120.

In a further embodiment of the invention it is also possible to apply a different method for the determination of the initial ROI for a given query image 305 within the ROI determination step 300.

The classifier 180, which has previously been trained by the ROI classifier training procedure 1 as explained above is applied on multiple regions of similar shape around the initial ROI of the query image 305 in order to get the best matching location and thus the best score. Since the ROIs were improved during the training in the same way and have only been searched at positions in the vicinity of the initial ROI, it is sufficient to choose restrictive parameter settings for the classifier 180 even for a high probability of finding the relevant object.

The advantage of a restrictive classifier 180 is usually a low false positive rate. In an ROI classification step 310, the classier 180 provides a probability p_pos of the query image being a positive image.

Ifp_pos is lower than a predetermined first threshold thr_1, a negative classification 340 is returned by a lower threshold comparison 315. Otherwise a positive classification 350 is returned, however only if the probability p_pos surpasses a predetermined second threshold thr_2 in a threshold comparison 317.

If the value of p_pos is in between thr_1 and thr 2, the confidence of the classifier 180 is considered too small for providing a definite decision. In this case, a context/background search is applied to classify the image.

For the context/background search, the ROI of the query image 305 is inverted in a confidence determination step 320 in order to obtain its context/ background region. In a further embodiment of the invention, in the confidence determination step 320 a local context/background is created by growing the ROI and excluding the original ROI from the extend region (see figure 3, confidence determination step 320 by context/background analysis).

Further on, in the confidence determination step 320, the context/background search index 250 is searched for context/background entries that are similar to the query context/background. A predetermined number *n* of results that matches the query context/background best is returned together with the corresponding label.

These returned n results are re-ranked using the context/background similarity measure 240. A subset of these re-ranked images containing only a predetermined number m of images with m lower than or equal to *n* is used to compute a confidence value p_posBgr, which indicates whether the context/background of the query image 305 is typical for the positive image class.

In a further embodiment of the invention it is just determined whether the context/background of the query image 305 is mapped to the same index as the context/background of any positive training images. Thus, in this embodiment of the invention, the calculation of the background similarity measure 240 is omitted.

If p_posbgr surpasses a predetermined third threshold thr_3, a positive classification 350 is returned by a confidence threshold comparison 330. Otherwise, a negative classification 340 is returned by a confidence threshold comparison 330.

In a preferred embodiment of the invention, the thresholds thr_l, thr_2 and thr_3 are determined by analyzing the training set using Bayesian statistics.

Both the ROI classifier training procedure 1 and the background training procedure 2 can be implemented based on various visual features. Also, various machine learning algorithms can be applied in order to adapt the classifier 180. Furthermore, the context/background search index 250 can be implemented in different ways and various context/background similarity measures 240 can be used.

Furthermore, images with negative classification can be differently processed. In particular, if an image has a negative classification then the image may not be displayed. Additionally or optionally, a message or report may be communicated to a surveillance instance to react. Alternatively, the image content may be modified to display a positive image.

Additionally or alternatively, images with positive classification can be differently processed. In particular, if an image has a positive classification 350 a respective object in the image may be segmented and if the respective object is a person a pose of the person may be identified.

In a preferred embodiment of the invention, differently modified instances of the ROI classification training procedure 1 and/or differently modified instances of the background training procedure 2 are applied simultaneously in order to obtain multiple classification results 340, 350 for a query image 305. Thus, both the classification and performance and the confidence can be improve by combining the individual classifications into one final decision, for instance by majority voting.

### List of References

- 1: ROI classifier training procedure
- 100: initial ROI determination step
- 105: training set
- 110: initial ROI classifer training step
- 120: initial performance validation step
- 130: ROI improvement step
- 140: re-training of ROI classifier step
- 150: performance validation step
- 160: performance comparison
- 170: baseline revision step
- 180: classifier
- 190: set of improved ROIs
- 2: background training procedure
- 200: context/background inversion step
- 210: context/background feature extraction step
- 220: context/background indexing step
- 230: context/background similarity training step
- 240: context/background similarity measure
- 250: context/background search index
- 3: classification procedure
- 300: ROI determination step
- 305: query image
- 310: ROI classification step
- 315: lower threshold comparison
- 317: upper threshold comparison
- 320: confidence determination step by context/background analysis
- 330: confidence threshold comparison
- 340: negative classification
- 350: positive classification
- S: start of a procedure
- Y: control flow on true condition
- N: control flow on false condition

## Claims

1. Method for binary classification of a query image (305), comprising the training of a classifier, comprising the steps of:
- automatically determining initial configurations of regions of interest in positive training images from a weakly labeled training set by means of an initial region determination procedure,
- automatically and iteratively refining the regions of interest in the positive training images by means of a classifier refinement procedure,
and applying said classifier, comprising the steps of
- automatically determining an initial configuration of a region of interest in the query image (305) by means of an initial region of interest characteristic learned during said initial region determination procedure,
- automatically determining a refined region of interest in the query image (305) and a probability value assigned thereto by means of a region refinement procedure,
- automatically assigning the image a negative classification (340) if said probability value is lower than or equal to a predetermined first threshold and
- automatically assigning the image a positive classification (350) if said probability value is greater than a predetermined second threshold.

2. Method according to claim 1, wherein the region refinement procedure comprises the following steps:
- automatically deriving a plurality of regions of interest from the initial region of interest by varying position, scale and aspect ratio of the initial region of interest,
- automatically deriving a feature descriptor for each region of the plurality of regions of interest by means of a feature extraction procedure,
- automatically assigning a probability value to each region of said plurality of regions of interest described by said feature descriptor by means of a classification procedure,
- automatically picking a refined region of interest that is assigned the highest probability value amongst the said plurality of regions of interest.

3. Method according to one of the previous claims, wherein the initial region determination procedure identifies an initial region of interest **characterized by** at least one pattern and/or feature that occurs consistently across the positive training images and that does not occur across the negative images.

4. Method according to one of the previous claims, wherein the initial region determination procedure identifies an initial region **characterized by** at least one dominant and/or common color that occurs consistently across the positive training images.

5. Method according to one of the previous claims, wherein the classifier refinement procedure comprises at least one iteration comprising the steps of
- training a binary classifier on the regions of interest of the positive images and on the negative images or parts thereof,
- determining refined regions of interest of the positive images by applying said region refinement procedure
- replacing the regions of interest of the positives images with said refined regions of interest of the positive images,
- training a binary classifier on the refined regions of interest of the positive images and the negative images or parts thereof.

6. Method according to claim 5, comprising the following step:
- determining a validation performance for the trained classifier and further on comprising a repetition of the following steps:
- retraining the classifier by automatically and iteratively refining regions of interest in the positive training images by means of a classifier refinement procedure,
- determining a validation performance for the retrained classifier until the validation performance for the retrained classifier is no longer improved or until a predetermined number of iterations is reached.

7. Method according to one of the previous claims, comprising the following steps:
- if the probability value assigned to the query image (305) is in between the first and the second threshold:
- automatically deriving a confidence value by means of a comparison procedure,
- determining a corrected probability value as a function of the probability value and the confidence value where said function is monotonically increasing with respect to the confidence value,
- automatically assigning the image a negative classification (340) if said corrected probability value is lower than a predetermined third threshold and
- automatically assigning the image a positive classification (350) if said corrected probability value is greater or equal than the predetermined third threshold.

8. Method according to claim 7, wherein the corrected probability value solely depends on the confidence value.

9. Method according to one of the previous claims, wherein the feature extraction procedure comprising the following steps:
- determining at least one local feature descriptor,
- optionally clustering local feature descriptors into visual words and
- optionally deriving a histogram for said visual words.

10. Method according to one of the previous claims, wherein the classification procedure comprises the application of a Support Vector Machine onto the feature descriptor.

11. Method according to one of the previous claims, wherein the classification procedure comprises the application of the Adaptive Boosting Algorithm onto the feature descriptor.

12. Method according to one of the previous claims, wherein the comparison procedure comprising the following steps:
- automatically determining a background region with respect to the region of interest for the query image (305) that is disjoint with the region of interest,
- retrieving a non-empty comparison set of weakly labeled comparison images that match said background region for the query image according to some predetermined similarity measure and
- automatically determining a confidence value for the query image (305) from the labeling data of the images of the comparison set, where for a fixed number of images in the comparison set the confidence value increases if the percentage of positive images increases.

13. Method according to one of the previous claims, wherein if the image has a negative classification (340) then the image is not displayed and/or the image content is modified before it is displayed on a human readable device.

14. Method according to one of the previous claims, wherein if the image has a negative classification (340) then a report is submitted, in particular communicated to a surveillance instance.

15. Method according to one of the previous claims, wherein if the image has a positive classification (350) a respective object in the image is segmented and if the respective object is a person a pose of the person is identified.

16. Use of a plurality of diverse methods according to one of the previous claims 1 to 15 for binary classification of a query image (305), wherein the query image (305) is assigned a classification (340, 350) if a predetermined number of the diverse methods assign that classification (340, 350) to the query image.
